# EUROPEAN PATENT SPECIFICATION

(11) **EP 0 957 000 B1**
(45) Date of publication and mention of the grant of the patent: **27.07.2005**
(21) Application number: 99303782.9
(22) Date of filing: 14.05.1999
(51) Int. Cl.: B60Q 1/44

(54) **Progressive brake light system**
Progressive Bremsleuchtenverfahren
Système d'indication de freinage progressif

(30) Priority: 14.05.1998 US 78632
(43) Date of publication of application: 17.11.1999
(73) Proprietor: Newton, John Danny, Leigh-on-Sea, Essex SS9 4NL (GB)
(72) Inventor: Newton, John Danny, Leigh-on-Sea, Essex SS9 4NL (GB)
(74) Representative: Gillam, Francis Cyril

(56) References cited:
- WO-A-93/15931
- DE-A- 4 200 675
- US-A- 4 983 953

## Description

The present invention relates to vehicle brake lights and more particularly to a progressive brake light system (or vehicle deceleration indicating system) for providing an indication to the driver of a following vehicle of the extent to which the vehicle fitted with the system is decelerating.

The use of brake lights is well known, and prior art brake lights basically consist of a rear facing light or lights mounted on a vehicle, which lights are controlled by a switch which is closed on operation of the brake control device. Such prior art brake lights have provided a means of indicating that the brake pedal of the vehicle to which they are attached has been depressed, and therefore that the vehicle is likely, but not certain, to start decelerating. However, to those travelling in a following vehicle, with the known brake light arrangement there is no indication of the rate of deceleration, ie. the urgency of the braking. For example, prior art brake light arrays will illuminate if the brake is touched possibly by accident or unwittingly, in exactly the same way as when the pedal (or other control mechanism) is pressed hard down during emergency braking.

Some attempts have been made to avoid this problem by fitting a simple sensor to the pedal which gives a variable output signal dependant on the extent to which the brake pedal is depressed, this in turn controlling the luminous intensity of the brake lights. Such a system unfortunately has a number of disadvantages, in particular the deceleration caused by depression of the pedal does not have a proportional linear relationship to the distance the pedal is moved. For example the initial movement of the pedal may have little or no effect on the on the speed of the vehicle, whereas a small movement when the brake is depressed close to its maximum amount may have a significant effect on the rate of deceleration. In addition the system does not transpose between different cars because the brake pedal's range of movement varies significantly, even on cars of a similar make. Furthermore the range may alter on a single car due to a number of factors including wear and tear. Yet another disadvantage of this type of prior art system is that when the variable intensity brake light comes on, the driver of a following car has no reference by which to judge the intensity of the light and therefore no way of judging the possible severity of the braking. In such circumstances it is safer for the following driver to judge the signal of a normal brake light. This problem may be compounded by bad conditions such as fog, or by dirt on the lamps.

In view of the foregoing disadvantages inherent in the known types of brake lights, the present invention provides a new progressive brake light system which can be used for providing to the drivers of following vehicles with an indication of the extent to which the vehicle in front, i.e. the vehicle fitted with the system, is decelerating.

Attempts have been made to develop a progressive braking system, for example WO 93/15931 A (Tonkin) discloses stationary vehicle detection means and an indicator that displays the magnitude of deceleration. This invention however does not have memory means and therefore cannot be calibrated for individual vehicles or give a discrete indication that the vehicle has reached the maximum level of deceleration.

In these respects, the progressive brake light system according to the present invention substantially departs from the conventional concepts and designs of the prior art, and in so doing provides an apparatus primarily developed for the purpose of providing the drivers of other vehicles with an indication of the extent to which the vehicle is decelerating.

An aim of the present invention is to provide a new progressive brake light system which has many of the advantages of the brake lights mentioned heretofore and many novel features that overcome the problems mentioned above and those associated with conventional brake lights. Furthermore it is an aim to provide a brake light system that displays the rate of deceleration of a vehicle by varying the area or type of illumination of a lamp assembly in such a way that the relative degree of deceleration may be easily judged.

WO 93/15931, which is considered to be the closest prior art, discloses a vehicle deceleration indication system with the features of the preamble of claim 1.

According to the present invention there is provided a vehicle deceleration indication system comprising: an accelerometer situated within a vehicle and adapted to detect a deceleration of the vehicle; a lamp assembly including a plurality of lamps each adapted to illuminate upon the supply of current thereto; control means connected between the accelerometer and lamp assembly, the control means being adapted to control the supply of current to the lamps in a predetermined sequence as the detected deceleration increases; characterised in that there is further provided memory means for continuously monitoring the deceleration detected by the accelerometer and storing a maximum detected deceleration; wherein means are provided to effect resetting of the memory means; and wherein the lamp assembly further includes a peripheral lamp configured to give the appearance of a light source that extends around the rest of the lamp assembly, which peripheral lamp is illuminated at detection of the maximum stored deceleration.

The present invention may use as the accelerometer any device capable of detecting a change in the deceleration of the vehicle. These devices may include an accelerometer adapted to detect a deceleration of the vehicle. These devices may include an accelerometer adapted to detect a deceleration of the vehicle from an amount of change in the momentum thereof with respect to the force of gravity such as pendulum type sensors, gyroscopic sensors, or systems that calculate the acceleration from positional information supplied for example by Global Positioning System (GPS) receiver. This provides a system which is significantly different from all prior out devices, in that the new system displays a guide to the actual rate of deceleration of the vehicle.

The lamp assembly preferably includes a plurality of horizontally oriented linearly aligned lamps. An illuminateable peripheral lamp may be situated about a perimeter of the lamp assembly. The peripheral lamp could comprise multiple bulbs that illuminate synchronously to give the impression of a single light source that extends around the other lamps, or it could comprise a fluorescent strip light tube (or tubes) configured to extend around the lamp assembly and create a similar effect. To be visible to following traffic the lights should be rearwardly directed and so, preferably, the lamp assembly is mounted at the rear of the vehicle. In use, each lamp of the lamp assembly is adapted for discrete illumination upon the supply of current thereto.

A mode selection switch may be provided for allowing the selection of the operation of the system in one of a plurality - for example four - modes, having distinct illumination sequences. Normally the mode selection switch will only be operable by the suppliers, manufactures or fitters of the system, so that the system may be configured or reconfigured. It is preferred that this control is maintained to ensure continuity between the display sequences of different vehicles.

Advantageously the vehicle deceleration indication system further includes memory means for continuously monitoring the deceleration detected by the accelerometer and further storing the maximum rate of deceleration detected. This stored maximum value may be used to calculate the percentage of the maximum deceleration occurring at each braking incident and thereby allow the correct illumination of the lamp assembly. In order to permit the re-calibration of the system the memory means is preferably adapted to be selectively reset. Connected between the accelerometer, lamp assembly, mode selection switch and memory means is control means. In each mode the control means actuates the lamps of the lamp assembly as a function of a percentage of the maximum deceleration.

Embodiments of the present invention may be easily and efficiently manufactured and marketed, and may be of a durable and reliable construction. They may have a low cost of manufacture with regard to both materials and labour.

By way of example only, progressive brake light systems according to the present invention will now be described in detail, reference being made to the accompanying drawings, wherein:
**Figure 1** is a schematic diagram of one embodiment of vehicular deceleration indication system according to the present invention.
**Figure 2** is a table depicting the lighting sequences for possible modes of operation of the present invention;
**Figure 3** is a front view of a lamp assembly according to the present invention with or without peripheral illumination;
**Figure 4** is a rear view of the lamp assembly shown in Figure 3; and
**Figure 5** is a flow chart showing the operation of the present invention with specific relation to the learning capabilities thereof.

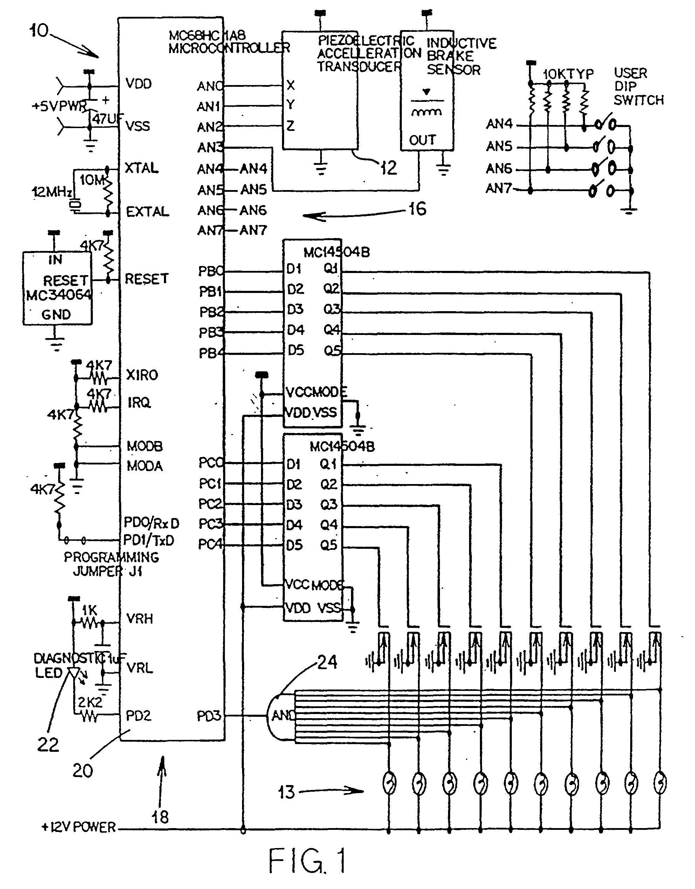

Referring initially to Figure 1, a schematic diagram of the present invention, generally indicated 10, includes an accelerometer 12 situated within a vehicle. During use, the accelerometer is adapted to detect a deceleration of the vehicle by any suitable means. In this example a momentum switch is used, but an inertial (e.g. gyroscopic) or positional calculating sensor could also be used. To relay what the accelerometer detects, the same utilises an output signal with varying voltage levels corresponding to the amount of deceleration. As such, no reliance is made upon mechanical brake foot pedal or the like which may render inaccurate results. It should be noted, however, that an inductive brake sensor, gyroscopic sensor, or the like may be used as a back-up sensor if desired. As such, the integrity of the main accelerometer may be constantly checked.

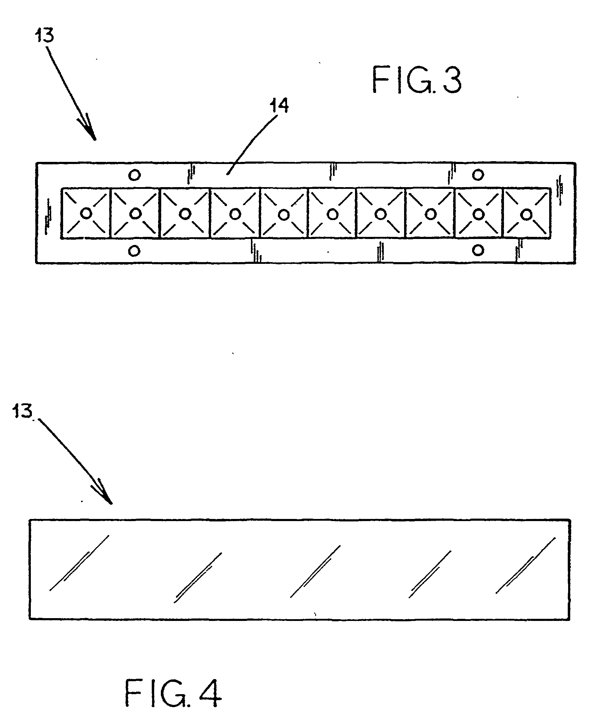

Figure 3 shows a lamp assembly 13 including a plurality of horizontally oriented, linearly aligned lamps. An illuminateable peripheral lamp 14 is situated about a perimeter of the linear aligned lamps. It should be noted that the peripheral lamp could actually include multiple lamps encompassing the linear aligned lamps, as shown in Figure 3, or could comprise one or more shaped fluorescent tube(s). Preferably, the lamp assembly is mounted on the rear of the vehicle. In use, each lamp of the lamp assembly is adapted to illuminate upon the supply of current thereto.

A mode selection switch 16 is provided for allowing a person to select the operation of the system in one of a first, second, third, or fourth mode of operation. Details relation to each mode of operation will be described below.

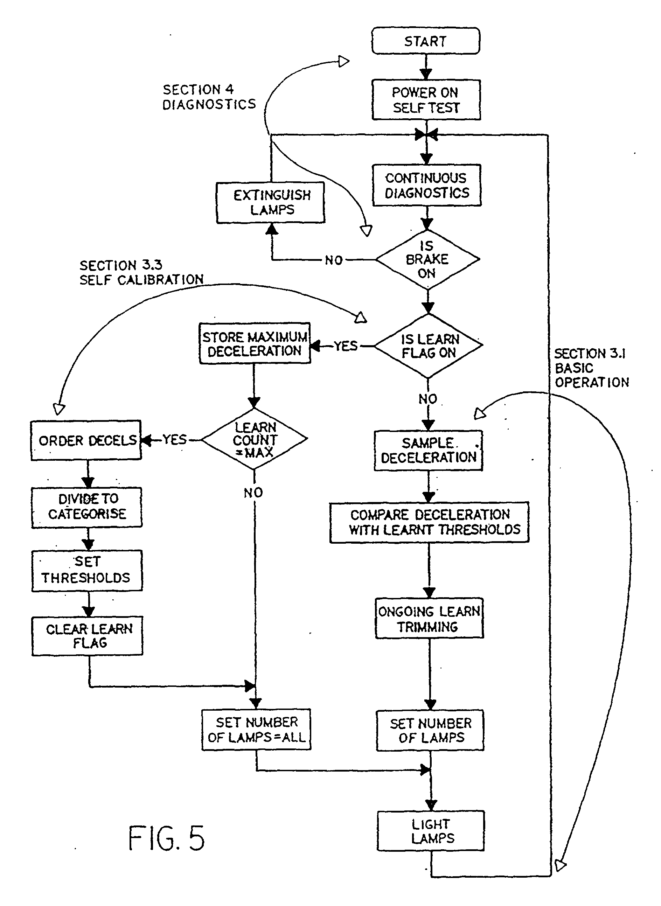

Memory means are also included for continuously monitoring the deceleration detected by the accelerometer and further storing the maximum deceleration detected. The stored maximum deceleration is used to calculate the percentage of the maximum deceleration occurring at any given point. The memory means are adapted to be reset thus requiring the memory means to again "learn" a new maximum deceleration significantly easing re-calibration or calibration to new vehicles of different braking characteristics. Such different characteristics could be due to differing size, height, and weight etc., note Figure 5.

Control means 18 are connected between the accelerometer, lamp assembly, mode selection switch and memory means. The control means preferably takes the form of microprocessor 20 with onboard control circuitry, look-up tables, memory, encoders and the like. In each mode, the control means actuates the lamps of the lamp assembly as a function of a percentage of the maximum deceleration. A simple switch or an inductive sensor may be used to identify when the existing brake light system has been activated. That information is then supplied to the control means and may be used to assist in functioning of the system. Inductive sensors may detect the flow of current in the existing brake light circuitry and permit retrofitting fitting of a system according to the present invention to older cars without intruding on the existing system and therefore possibly compromising its operation.

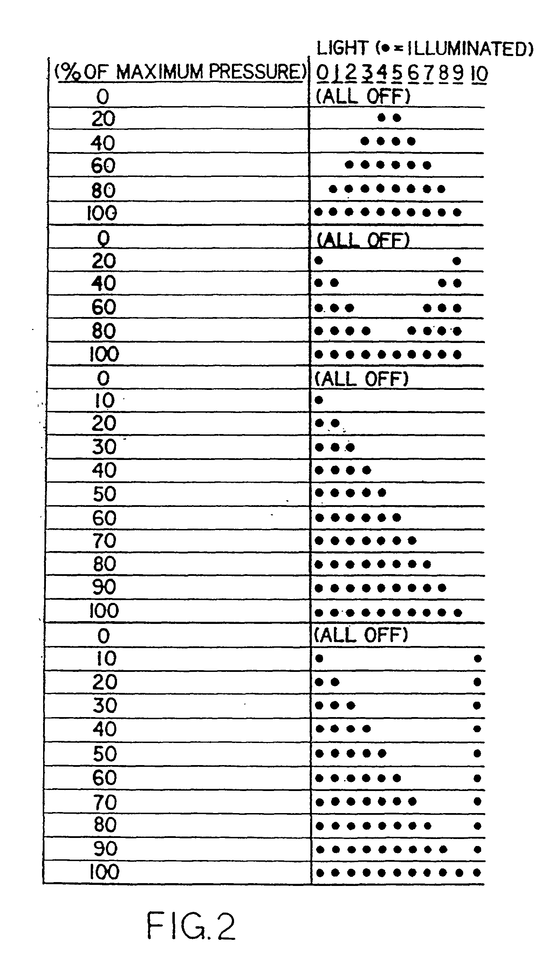

As shown in Figure 2, the control means, in the first mode of operation (indicated by lines 1 to 6 of the table), are adapted to actuate the lamps (indicated in columns 0 to 9) from centre lamps (4 and 5) of the lamp assembly to end lamps (0 and 9) as the detected deceleration increases. In the first mode the peripheral lamp (column 10) may be illuminated upon the detection of the maximum deceleration. In the second mode of operation (indicated by lines 7 to 12), the control means is adapted to actuate the lamps from the end lamps to the centre lamps as the detected deceleration increases. Further, the peripheral lamp may be illuminated upon the detection of any deceleration.

The control means, in the third mode of operation (indicated by lines 13 to 23), serves to actuate the lamps from one end of the assembly (0) to the other end (9) as the detected deceleration increases, and further may illuminate the peripheral lamp 10) only upon the detection of the maximum deceleration. Finally, in the fourth mode of operation (indicated by lines 24 to 34), the control means actuates the lamps from one end of the lamp assembly (0) to the other end (9) as the detected declaration increases. In this final mode, the peripheral lamp (10) is illuminated upon the detection of any deceleration, i.e. immediately on detection of a deceleration.

An additional provision will exist to automatically pulse a number of sections of the lamps at, or between, different stages, thereby providing further indication of extreme deceleration, and enhancing the distinction between the present invention and existing secondary brake warning systems.

During use, the number of lamps illuminated with each incremental increase in the percentage of maximum deceleration may be varied from that shown in Figure 2. Further, it should be noted that when the present invention is first installed or is reset, the control means is in a "learn" mode at the start of which any deceleration is deemed the maximum deceleration and subsequent braking may increase the stored maximum value. In learn mode the device is not ready to function normally, but yet should still indicate the braking of the car to the same extent as a conventional brake light. Therefore, when the system is in learn mode, upon the detection of braking of any magnitude the lamp assembly is controlled to illuminate in such a way to approximate a conventional brake light. In a linear arrangement of lamps as in Figure 3, this could be achieved by illuminating only the lamps situated at the ends of the arrangement. Thus, a safeguard is afforded.

As time progresses in learn mode, the maximum deceleration is increased as different driving situations are encountered or simulated. Whenever any change in the maximum deceleration occurs, the control means recalculates the amount of deceleration associated with each percentage of the maximum deceleration that it takes to illuminate each number of lights.

Preferably, a diagnostic check is conducted during each start-up. If any component of the check results in failure, a flashing LED 22 indicates the same. One of the checks includes the illumination of each lamp, whereby an AND gate 24 is used to check that each lamp is operational. Note Figure 1. Failure of the foregoing test results in constant illumination of the LED 22.

The most significant benefits of the present invention will be experienced when the rate of deceleration changes during braking, or the braking performance of a vehicle is not as expected. In heavy, slow moving traffic, when following a vehicle with automatic transmission, a driver may be become desensitised to the brake lights of the vehicle in front if its driver is resting his foot constantly on the brake pedal. If eventually, the vehicle has to actually brake hard, the driver of a vehicle following behind has little or no warning of this action. The present invention would give the correct information concerning this action, thereby possibly preventing a rear end collision.

## Claims

1. A vehicle deceleration indication system comprising:
an accelerometer (12) situated within a vehicle and adapted to detect a deceleration of the vehicle;
a lamp assembly (13) including a plurality of lamps each adapted to illuminate upon the supply of current thereto;
control means (18) connected between the accelerometer and lamp assembly, the control means being adapted to control the supply of current to the lamps in a predetermined sequence as the detected deceleration increases;
**characterised in that** there is further provided memory means for continuously monitoring the deceleration detected by the accelerometer and storing a maximum detected deceleration;
wherein means are provided to effect resetting of the memory means; and
wherein the lamp assembly further includes a peripheral lamp (14) configured to give the appearance of a light source that extends around the rest of the lamp assembly, which peripheral lamp is illuminated at detection of the maximum stored deceleration.

2. A vehicle deceleration indication system as claimed in claim 1, and further including a mode selection switch (16) for selecting a pre-determined sequence of lamp illumination.

3. A vehicle deceleration indication system as claimed in claim 1 or claim 2 in which the lamp assembly (13) includes a plurality of substantially horizontally oriented, linearly aligned lamps.

4. A vehicle deceleration indication system as claimed in claim 3, wherein a selectable sequence comprises actuating the lamps from the centre lamps of the lamp assembly to the end lamps as the detected deceleration increases.

5. A vehicle deceleration indication system as claimed in claim 3, wherein a selectable sequence comprises actuating the lamps from the end lamps of the lamp assembly to the centre lamps as the detected deceleration increases.

6. A vehicle deceleration indication system as claimed in claim 3, wherein a selectable sequence comprises actuating the lamps from one set of end lamps to another set of end lamps of the lamp assembly as the detected deceleration increases.

7. A vehicle deceleration indication system as claimed in any of the preceding claims, in which diagnostic means are provided to monitor the operation of the lamps and report any failure to the driver of the vehicle.

## Patentansprüche

1. Fahrzeugverzögerungs-Anzeigesystem umfassend:
einen Beschleunigungsmesser (12), der sich in einem Fahrzeug befindet und angepaßt ist, um eine Verzögerung des Fahrzeugs zu detektieren,
eine Lampenanordnung (13), die eine Vielzahl von Lampen aufweist, von denen jede angepaßt ist, um bei der Zufuhr von Strom an sie zu leuchten, und
Steuermittel (18), die zwischen den Beschleunigungsmesser und die Lampenanordnung verbunden sind, wobei die Steuermittel angepaßt sind, um die Zufuhr von Strom an die Lampen in einer vorbestimmten Abfolge zu steuern, während die detektierte Verzögerung zunimmt,
**dadurch gekennzeichnet, daß** ferner ein Speichermittel zum kontinuierlichen Überwachen der durch den Beschleunigungsmesser detektierten Verzögerung und zum Speichern einer maximalen detektierten Verzögerung vorgesehen ist,
wobei Mittel vorgesehen sind, um ein Zurücksetzen der Speichermittel zu bewirken, und
wobei die Lampenanordnung ferner eine Randlampe (14) aufweist, die ausgestaltet ist, um das Erscheinungsbild einer Lichtquelle zu ergeben, die um den Rest der Lampenanordnung verläuft, wobei die Randlampe bei der Detektion der maximalen gespeicherten Verzögerung zum Leuchten gebracht wird.

2. Fahrzeugverzögerungs-Anzeigesystem nach Anspruch 1, das ferner einen Betriebsartenwahlschalter (16) zum Wählen einer vorbestimmten Lampenaufleucht-Abfolge aufweist.

3. Fahrzeugverzögerungs-Anzeigesystem nach Anspruch 1 oder Anspruch 2, bei dem die Lampenanordnung (13) eine Anzahl im wesentlichen horizontal angeordneter, linear ausgerichteter Lampen aufweist.

4. Fahrzeugverzögerungs-Anzeigesystem nach Anspruch 3, bei dem eine wählbare Abfolge das Aktivieren der Lampen von den zentralen Lampen der Lampenanordnung zu den Endlampen umfaßt, während die detektierte Verzögerung zunimmt.

5. Fahrzeugverzögerungs-Anzeigesystem nach Anspruch 3, bei dem eine wählbare Abfolge das Aktivieren der Lampen von den Endlampen der Lampenanordnung zu den zentralen Lampen umfaßt, während die detektierte Verzögerung zunimmt.

6. Fahrzeugverzögerungs-Anzeigesystem nach Anspruch 3, bei dem ein wählbare Abfolge das Aktivieren der Lampen von einem Satz von Endlampen zu einem anderen Satz von Endlampen der Lampenanordnung umfaßt, während die detektierte Verzögerung zunimmt.

7. Fahrzeugverzögerungs-Anzeigesystem nach einem der vorhergehenden Ansprüche, bei dem Diagnosemittel vorgesehen sind, um den Betrieb der Lampen zu überwachen und jegliche Störung an den Fahrer des Fahrzeugs zu melden.

## Revendications

1. Système d'indication de freinage pour véhicule, comprenant :
- un accéléromètre (12) disposé à l'intérieur du véhicule et conçu pour détecter un freinage du véhicule ;
- un ensemble lampe (13) comprenant plusieurs lampes chacune étant prévue pour s'allumer lorsqu'on lui fournit du courant ;
- des moyens de commande (18) connectés entre l'accéléromètre et l'ensemble lampe, les moyens de commande étant prévus pour commander la fourniture de courant aux lampes, selon une séquence prédéterminée à mesure que le freinage détecté augmente ;
- **caractérisé en ce que** sont en outre fournis des moyens de mémoire pour surveiller de façon continue le freinage détecté par l'accéléromètre, et enregistrer un freinage détecté maximum ;
- dans lequel des moyens sont fournis pour réinitialiser les moyens de mémoire ; et,
- dans lequel l'ensemble lampe comprend en outre une lampe périphérique (14) configurée pour donner l'apparence d'une source de lumière qui s'étend autour du reste de l'ensemble lampe, lampe périphérique qui est allumée lors de la détection de l'accélération enregistrée maximale.

2. Système d'indication de freinage pour véhicule selon la revendication 1, et comprenant en outre un commutateur de sélection de mode (16) pour sélectionner une séquence prédéterminée pour l'allumage des lampes.

3. Système d'indication de freinage pour véhicule selon la revendication 1 ou 2, dans lequel l'ensemble lampe (13) comprend plusieurs lampes sensiblement alignées linéairement et orientées horizontalement.

4. Système d'indication de freinage pour véhicule selon la revendication 3, dans lequel une séquence qui peut être sélectionnée comprend l'activation des lampes à partir des lampes centrales de l'ensemble lampe vers les lampes d'extrémité, à mesure que le freinage détecté augmente.

5. Système d'indication de freinage pour véhicule selon la revendication 3, dans lequel une séquence qui peut être sélectionnée comprend l'activation des lampes à partir des lampes d'extrémité de l'ensemble lampe vers les lampes centrales, à mesure que le freinage détecté augmente.

6. Système d'indication de freinage pour véhicule selon la revendication 3, dans lequel une séquence qui peut être sélectionnée comprend l'activation des lampes à partir d'un jeu de lampes d'extrémité vers un autre jeu de lampes d'extrémité de l'ensemble lampe, à mesure que le freinage détecté augmente.

7. Système d'indication de freinage pour véhicule selon l'une quelconque des revendications précédentes, dans lequel des moyens de diagnostique sont prévus pour surveiller le fonctionnement des lampes et signaler toute défaillance au conducteur du véhicule.
